Europäisches Patentamt

European Patent Office

Office européen des brevets

(19)

(11) .Publication number: **0 147 891**
**B1**

# (12) EUROPEAN PATENT SPECIFICATION

(45) Date of publication of patent specification: **20.07.88**

(51) Int. Cl.⁴: **B 67 D 5/371**, B 67 C 11/06

(21) Application number: **84201854.1**

(22) Date of filing: **13.12.84**

(54) **Pouring spout.**

(30) Priority: **14.12.83 US 561454**

(43) Date of publication of application:
**10.07.85 Bulletin 85/28**

(45) Publication of the grant of the patent:
**20.07.88 Bulletin 88/29**

(84) Designated Contracting States:
**AT BE CH DE FR GB IT LI LU NL SE**

(56) References cited:
**FR-A- 569 882**
**FR-A-1 552 812**
**US-A- 886 237**
**US-A-4 053 002**

(73) Proprietor: **Vachon, Léandre**
**2549 Chemin de l'Aéroport.**
**Thetford-Mines Quebec (CA)**

(72) Inventor: **Vachon, Léandre**
**2549 Chemin de l'Aéroport**
**Thetford-Mines Quebec (CA)**

(74) Representative: **Appoloni, Romano et al**
**ING. BARZANO' & ZANARDO MILANO S.p.A. Via**
**Borgonuovo 10**
**I-20121 Milano (IT)**

EP 0 147 891 B1

Courier Press, Leamington Spa, England.

## Description

This invention relates to a detachable pouring spout for use in pouring a given amount of liquid from a filling container into another container as specified in the precharacterising part of claim 1.

Pouring spouts of the kind referred to above are well known and, in use, the container with its spout is tipped to position the spout downwardly in a filling neck of the container to be filled: during tipping, liquid can be spilled from the spout before the latter is properly positioned. With conventional spouts it is also difficult to know when the container to be filled becomes full, as often the container overflows because the operator cannot see past the spout in the filling neck, and more liquid can be spilled when withdrawing the spout from the filling neck. Valve-fitted spouts are also known, intended to control the liquid flow through the spout, automatically to open the spout when it is inserted into the filling neck and automatically to close the spout when it is withdrawn.

Spouts of this kind are shown in US—A—791,261 of 1905 and US—A—886,237 of 1908, furthermore, FR—A—569.882 of 1923 discloses a tap for a wine barrel, comprising an inlet portion to be inserted into the barrel opening, and an outlet portion extending at 90° from the inlet portion: this feature does not allow an operator to support the outlet end of the spout and the filling neck of the container when using the spout. Moreover, such a structure is completely inapt to be used with a detachable spout and the valve arrangement is not compact as it would be desirable, so that this prior art teaching is reduced to the disclosure of an automatic valve.

The known valve-equipped spouts, however, are not suitable for use with certain containers, such as gasoline containers, which use a long, bent spout, as the conventional valved spouts are short and straight spouts with the valve means located where the spout joins the container. To operate valve means located where the spout joins the container in a long, bent spout would be difficult. The valve-actuating means needed to operate the valve means from the inlet end of a bent spout would be awkward and complicated. Many of the conventional valve-fitted spouts also employ valve-actuating means which are offset from the centre of the spout, and such non-symmetric valve-actuating means often jam or are difficult to operate and, moreover, the conventional valve-equipped spouts do not prevent possible overflow during filling.

In order to prevent the above outlined defects of the conventional spouts, the invention provides a detachable pouring spout for use in pouring a given amount of a liquid from a filling container into another container, said spout comprising:

a) a liquid-conducting tube having an inlet end and an outlet end;

b) means for detachably mounting the liquid-conducting tube onto the filling container with the inlet end of said tube in direct communication with the liquid inside said filling container;

c) valve means mounted in the tube for closing the same, said valve means including a valve seat mounted in the tube and a valve head mounted axially within said tube in cooperative relationship with respect to the valve seat in order to normally close said tube; and

d) actuating means mounted on the tube to open or close the valve means when the spout is inserted into, or withdrawn from the other container to be filled, said actuating means comprising: an actuating member consisting of a collar slidably mounted over the tube;

means for rigidly connecting the collar to the valve head of the valve means to open the same, said connecting means consisting of an apertured plate rigidly fixed to the collar across the same and a rigid pin extending centrally inside the collar from the centre of said apertured plate up to the valve head;

spring means bearing onto the tube and permanently pushing the collar away in order to keep the valve head in closing position against the valve seat unless a pressure is exerted onto the collar against the spring means, and

at least one stop provided in the outer surface of the collar for positive engagement with the edge of the filling neck on the other container to be filled, said at least one stop causing the collar to move against the spring means and thus to open the valve means when the outlet end of the tube is inserted and pushed into the filling neck of said other container to be filled, said spout being characterized in that:

e) the tube comprises a long inlet portion and a short outlet portion extending at an angle from the long inlet portion, said angle being less than 90°;

f) the valve means is short in size and mounted in the tube adjacent the outlet end thereof; and

g) stop means are externally mounted on the tube above the normal rest position of the collar to limit the upward movement of said collar when using the spout, said stop means being adjustable between one limit position where it completely blocks the collar and thus closes the tube, and another limit position where it allows the valve means to be fully opened.

According to a preferred embodiment, the outer surface of the collar is provided with at least two stops, which are of decreasing sizes to permit the spout to be used with filling inlets of different sizes and each stop consists of a step inwardly extending in the outer surface of the collar.

According to another preferred embodiment, the spout further comprises a light-conducting rod mounted on, and projecting past, the outlet portion of the tube.

Preferably, but not compulsorily, the valve seat of the spout has a truncated conical surface.

The invention will now be better understood with reference to the ensuing exemplary description of two preferred embodiments thereof, as illustrated in the accompanying drawings, wherein:

Fig. 1 is a view showing a spout according to the invention in use;

Fig. 2 is a detailed cross-section view of a first embodiment of the spout positioned ready for use;

Fig. 3 is a view similar to Fig. 2, but with the spout in actual use.

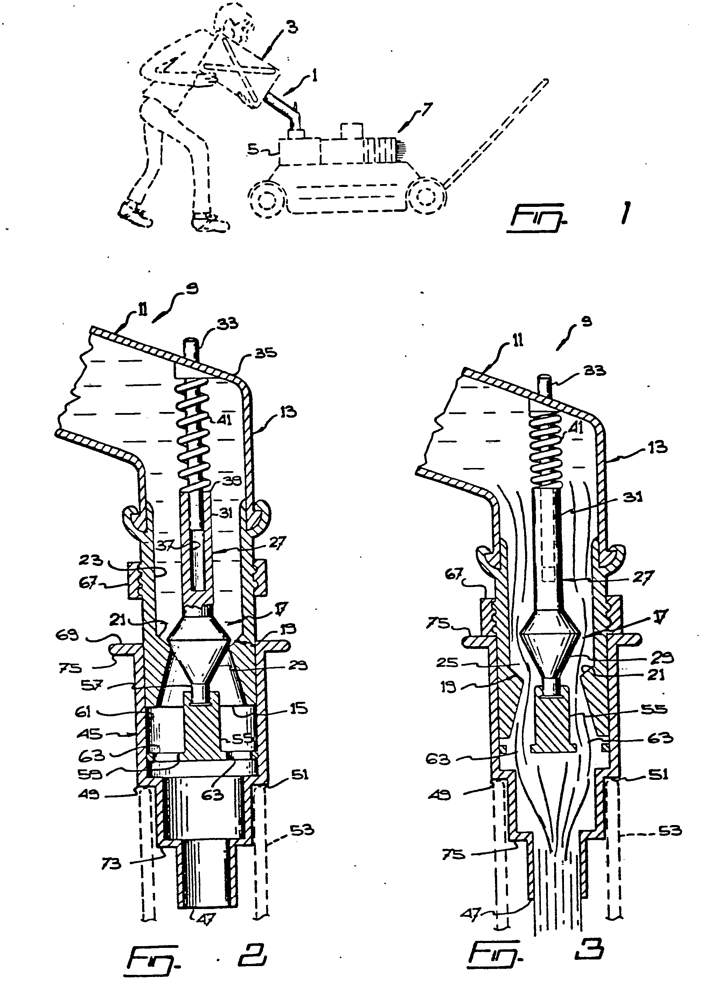

The pouring spout 1 according to the invention, as shown in Fig. 1, is adapted to be mounted on a filling container 3 by suitable means (not shown). The spout 1 can be permanently or detachably mounted on the container 3. The filling container 3, with the attached spout 1, is used to fill other tanks or containers with liquid. For example, as shown in Fig. 1, the container 3 can be used to fill a small tank 5 on a lawnmower 7 with gasoline.

The pouring spout 1 has a fluid-conducting tube 9 as shown in Fig. 2, divided into a relatively long inlet portion 11 and a relatively short outlet portion 13. The outlet portion 13 extends from the inlet portion 11 at a relatively sharp angle and terminates in an outlet end 15.

A valve 17 is provided in the outlet portion 13 of the tube 9 adjacent the outlet end 15 as seen in Fig. 2. The valve 17 normally closes the tube 9. The valve 17 includes a valve seat 19 fixed to the interior of the outlet portion 13 of the tube 9. The valve seat 19 provides a truncated, conical surface 21 sloping down from the inner surface 23 of the tubular outlet portion 13 towards the outlet end 15 to define a circular valve outlet opening 25 as seen in Fig. 3. The valve seat 19 can be molded integrally with the outlet portion 13 of the tube 9. The valve 17 also includes a valve member 27 having a conically shaped valve head 29 and a guide stem 31 extending from one end of the valve head 29. The valve member 27 is located axially of the outlet portion 13 with its head 29 passing partway through the outlet opening 25 in the valve seat 19. The head 29 abuts the valve seat surface 21 to normally close the outlet opening 25. A guide pin 33 is fixed to the wall 35 of the inlet portion 11 of the tube 9. The guide pin 33 is located to project into the outlet portion 13 of the tube 9 along its longitudinal axis. A socket 37 extends axially into the stem 31 of the valve member 27 from its free end 39. The guide pin 33 fits slidably into the socket 37 of the stem 31 to guide the valve member 27 for axial movement within the outlet portion 13. A compression spring 41 is provided about the guide pin 33, located between the wall 35 of the inlet portion 11 of the tube 9, and the free end 39 of the stem 31 of the valve member 27. The spring 41 normally biases the valve head 29 against valve seat 19 to close the valve 17.

The spout 1 includes an actuating member 45, as seen in Fig. 2, slidably mounted on the outlet portion 13 of the tube 9 at its outlet end 15. The actuating member 45 is in the form of a collar encircling the outlet portion 13. It projects outwardly from the tube 9, terminating in an outlet end 47. The collar 45 is provided with at least one stop or abutment 49 on its outer surface spaced from its outlet end 47 for cooperating with the inlet edge 51 of a filling neck 53 on the tank being filled as will be described. Means are provided for connecting the collar 45 to the valve 17. The connecting means can comprise a pin 55 mounted axially within the collar 45. The pin 55 projects up into the tube 9 of spout 1 and is fastened to a short stem 57 projecting axially from the end of the valve head 29. The pin 55 is supported within the collar 45 by an apertured plate 59. The plate 59 extends across the interior of the collar 45 and is fastened to the wall 61 of the collar. The pin 55 projects up from the central portion of the plate 59. Apertures 63 are located in the plate 59 between pin 55 and the wall 61 of the collar for passing liquid.

In operation, the spout 1 is initially inserted down into the filling neck 53 of the tank 5 being filled as shown in Fig. 2. The valve 17 is normally closed by the spring 41, thus preventing any liquid from passing out of the spout 1 as it is positioned in the neck 53. As the spout 1 is more fully inserted into the neck 53, the stop 49 on collar 45 contacts the inlet edge 51 of the neck 53. The collar 45 starts to smoothly and evenly slide up the outlet portion 13 of the tube 9 as shown in Fig. 3.

As the collar 45 slides up, the pin 55 that it carries, moves the connected valve member 27 up off the seat 19, against the force of the spring 41, to open the valve 17. This allows the liquid to now enter the tank being filled. When filling is completed, the spout 1 is withdrawn from the neck 53, allowing the spring 41 to close the valve 17, and simultaneously slide the collar 45 downwardly at a rest position. With the collar 45, and its connecting means to the valve member 27, symmetrical with respect to the outlet portion 13 of the tube 9, the collar 45 moves easily along the outlet portion 13 to ensure smooth and reliable operation.

If desired, a screwable stop ring 67 can be mounted on the outside of the outlet portion 13 of the tube 9 above the normal rest position of the collar 45. The position of the stop ring 67 can be adjusted with respect to the top edge 69 of the collar 45 by screwing it up or down from one limit position where it completely blocks the collar 45 and thus closes the tank, to another limit position where it allows the valve 17 to be fully opened. In any intermediate position, the stop ring permits to limit upward movement of the collar 45 and thus to adjust the outflow of the valve 17.

Preferably the collar 45 is constructed to provide more than one stop or abutment. As shown, in Figs. 2 and 3, the outer portion of the collar 45, toward the outlet end 47, is stepped inwardly once to provide a stop 49, and then stepped inwardly a second time to provide a second stop 73 spaced longitudinally from the first stop. In addition, a flange 75 can be provided on the collar 45 at its top edge 69 to provide a third stop longitudinally spaced from the other two stops. Each of the stops 49, 73, 75 progressively decrease in size from the flange 75 toward the outlet end 47 of the collar 45. The plurality of different-sized stops permits the spout to be used with a number of different sized filling inlets.

Means can be provided on the spout for use in determining when the liquid in the container being filled reaches a full level. These means comprise visual indicating means in the form of a light-conducting rod. The rod can be made of suitable material such as plastic or glass, and is mounted on the outlet portion of the spout with one sensing end projecting well past the outlet end of the outlet portion. The other viewing end of the rod projects up past the other end of the outlet portion.

When filling a tank using the spout, the liquid rises into the inlet tube of the tank and eventually reaches the sensing end of the light-conducting rod on the spout. The person filling the tank watches the viewing end of the rod. When the liquid reaches the sensing end of the rod, the viewing end will darken indicating to the person that the tank is filled. The spout is then withdrawn without overflow occurring.

In order to provide the spout with a visual indicating means the axial bore 37 can be extended through the stem 31, the valve head 29, the connecting stem 57, the pin 55 and the plate 59. The guide pin 33 is extended to pass out of the plate 59 through the extended bore 37 while the valve member 27, pin 55, and plate 59 are slidably mounted on the pin 33. The pin 33 remains fixed to wall 35 as before, while passing through it. The pin 33 is now however made from light-conducting material such as plastic and operates in the same manner as the light conducting rod described above.

## Claims

1. A detachable pouring spout for use in pouring a given amount of a liquid from a filling container (3) into another container (5), said spout (1) comprising:

a) a liquid-conducting tube (9) having an inlet end and an outlet end;

b) means for detachably mounting the liquid-conducting tube (9) onto the filling container (3) with the inlet end of said tube in direct communication with the liquid inside said filling container (3);

c) valve means (17) mounted in the tube (9) for closing the same, said valve means including a valve seat (19) mounted in the tube (9) and a valve head (29) mounted axially within said tube (9) in cooperative relationship with respect to the valve seat (19) in order to normally close the said tube; and

d) actuating means mounted on the tube to open or close the valve means (17) when the spout is inserted into or withdrawn from the other container (5) to be filled, said actuating means comprising:

an actuating member consisting of a collar (45) slidably mounted over the tube (9);

means for rigidly connecting the collar (45) to the valve head (29) of the valve means to open the same, said connecting means consisting of an apertured plate (59) rigidly fixed to the collar (45) across the same and a rigid pin (55) extending centrally inside the collar form the center of said apertured plate (59) up to the valve head (29);

spring means (41) bearing onto the tube (9) and permanently pushing the collar (45) away in order to keep the valve head (29) in closing position against the valve seat (19) unless a pressure is exerted onto the collar against the spring means (41), and

at least one stop (49) provided in the outer surface of the collar (45) for positive engagement with the edge of a filling neck on the other container (5) to be filled, said at least one stop (49) causing the collar to move against the spring means (41) and thus to open the valve means when the outlet end of the tube (9) is inserted and pushed into the filling neck of said other container (5) to be filled; said spout (1) being characterized in that:

e) the tube (9) comprises a long inlet portion (11) and a short outlet portion (13) extending at an angle from the long inlet portion (11), said angle being less than 90°;

f) the valve means (17) is short in size and mounted in the tube (9) adjacent the outlet end thereof; and

g) stop means (67) are externally mounted on the tube (9) above the normal rest position of the collar (45) to limit the upward movement of said collar when using the spout, said stop means (67) being adjustable between one limit position where it completely blocks the collar (45) and thus closes the tube (9), and another limit position where it allows the valve means to be fully opened.

2. A spout as claimed in claim 1, characterized in that:

the outer surface of the collar (45) is provided with at least two stops (49);

said stops (49) are of decreasing sizes to permit the spout to be used with filling inlets of different sizes; and

each stop consists in a step inwardly extending in the outer surfaces of the collar (45).

3. A spout as claimed in claim 1 or 2 characterized in that it further comprises:

a light conducting rod mounted on and projecting past the outlet portion (13) of the tube (9).

4. A spout as claimed in claim 1, 2 or 3, characterized in that:

the valve seat (19) has a truncated, conical surface (21).

## Patentansprüche

1. Abnehmbares Giessrohr zum Giessen einer bestimmten Flüssigkeitsmenge aus einem Füllbehälter (3) in einen anderen Behälter (5), wobei das Giessrohr (1) folgende Teile umfasst:

a) eine die Flüssigkeit führende Leitung (9) mit einem Ein- und einem Auslassende,

b) Mittel zum lösbaren Anschluss der die Flüssigkeit führenden Leitung (9) am Füllbehälter (3), wobei das Einlassende der Leitung mit der sich im Füllbehälter befindenden Flüssigkeit unmittelbar in Verbindung kommt,

c) in der Leitung (9) angeordnete Ventilmittel (17) zum Schliessen derselben, die einen in der Leitung (9) eingebauten Ventilsitz (19) und einen axial in der Leitung (9) eingebauten Ventilkopf (29) aufweisen, der mit dem Ventilsitz (19) in Wirkverbindung steht, um die Leitung normal geschlossen zu halten, und

d) an der Leitung angeordnete Betätigungsmittel zum Öffnen oder Schliessen der Ventilmittel (17), wenn das Giessrohr in dem zu füllenden Behälter (5) eingesetzt ist oder davon abgezogen wird, wobei die Betätigungsmittel folgende Teile umfassen:

ein Betätigungsglied, das aus einem an der Leitung (9) verschiebbar angeordneten Bund (45) besteht,

Mittel zur starren Verbindung des Bundes (45) mit dem Ventilkopf (29) der Ventilmittel, um dieselben zu öffnen, wobei diese Verbindungsmittel aus einer quer am Bund (45) befestigten Lochplatte (59) und aus einem festen Stift (55) bestehten, der sich in der Mitte im Inneren des Bundes von der Mitte der Lochplatte (59) bis zum Ventilkopf (29) erstreckt,

Federmittel (41), die sich auf die Leitung (9) abstützen und den Bund (45) ständig beaufschlagen, um den Ventilkopf (29) gegen den Ventilsitz (19) in geschlossener Stellung zu halten, es sei denn, dass auf den Bund ein Druck gegen die Federmittel (41) ausgeübt wird, und

wenigstens einen Anschlag (49) an der Aussenfläche des Bundes (45) zum positiven Eingriff mit der Kante eines Füllansatzes an dem anderen, zu füllenden Behälter, wobei dieser wenigstens eine Anschlag (49) den Bund dazu veranlasst, sich gegen die Federmittel zu bewegen und dadurch die Ventilmittel zu öffnen, wenn das Auslassende der Leitung (9) im Füllansatz des zu füllenden Behälters (5) eingeschoben ist, wobei das Giessrohr (1) dadurch gekennzeichnet ist, dass:

e) die Leitung (9) einen langen Einlassabschnitt (11) und einene kurzen Auslassabschnitt (13) besitzt, der sich mit einem Winkel vom langen Einlassabschnitt (11) aus erstreckt, wobei dieser Winkel weniger als 90° beträgt,

f) die Ventilmittel (17) kurz gestaltet und in der Leitung (9) in der Nähe des Auslassendes derselben angeordnet sind, und

g) Anschlagmittel (67) an der Aussenseite der Leitung (9) oberhalb der normalen Ruhestellung des Bundes (45) angeordnet sind, um beim Gebrauch des Giessrohres die Aufwärtsbewegung des Bundes zu begrenzen, wobei diese Anschlagmittel (67) zwischen einer Grenzstellung, in der sie den Bund (45) ganz fest halten und dadurch die Leitung (9) geschlossen bleibt, und einer anderen Grenzstellung verstellbar ist, in der sie die vollständige Öffnung der Ventilmittel gestatten.

2. Giessrohr nach Anspruch 1, dadurch gekennzeichnet, dass

die Aussenfläche des Bundes (45) mit wenigstens zwei Anschlägen (49) versehen ist,

die Anschläge (49) abnehmende Abmessungen haben, um die Anwendung des Giessrohres zur Füllung unterschiedlich grosser Einlassöffnungen zu gestatten, und

jeder Anschlag aus einem sich in der Aussenfläche des Bundes (45) nach innen erstreckenden Absatz besteht.

3. Giessrohr nach Anspruch 1 oder 2, dadurch gekennzeichnet, dass es ausserdem einen Lichtleitstab aufweist, der am Auslassabschnitt (13) der Leitung (9) angeordnet ist und das Licht über diesen Abschnitt hinaus wirft.

4. Giessrohr nach Anspruch 1, 2 oder 3, dadurch gekennzeichnet, dass der Ventilsitz (19) eine kegelstumpfförmige Oberfläche (21) besitzt.

**Revendications**

1. Un bec verseur amovible utilisable pour verser une quantité donnée d'un liquide d'un contenant (3) de remplissage à un autre contenant (5), ce bec comprenant:

a) un tube (9) conducteur de liquide ayant une extrémité d'arrivée et une extrémité de sortie;

b) des moyens pour monter de façon amovible le tube (9), conducteur de liquide, sur le contenant (3) de remplissage et dont l'extrémité d'arrivée dudit tube est en communication directe avec le liquide à l'intérieur dudit contenant (3) de remplissage;

c) des moyens (17) à clapet montés dans le tube (9) pour le fermer, ces moyens à clapet incluant un siège (19) de clapet monté dans le tube (9) et une tête (29) de clapet monté axialement à l'intérieur dudit tube (9) en relation de coopération par rapport au siège (19) de clapet afin de fermer ledit tube de façon normale; et

d) des moyens de commande montés sur le tube pour ouvrir et fermer les moyens (17) à clapet lorsque le bec est inséré dans l'autre contenant (5) à être rempli ou à en être retiré, ces moyens de commande comprenant:

une pièce de commande consistant en un collet (45) monté coulissant sur le tube (9);

des moyens pour connecter rigidement le collet (45) à la tête (29) de clapet des moyens à clapet pour l'ouvrir, ces moyens de connection consistant en une plaque (59) ajourée fixée rigidement au collet (45) transversalement à celui-ci et un goujon (55) rigide s'étendant centralement à l'intérieur du collet à partir du centre de ladite pièce (59) ajourée jusqu'à la tête (29) de clapet;

des moyens (41) à ressort portant sur le tube (9) et repoussant en permanence le collet (45) de façon à maintenir la tête (29) de clapet en position fermée contre le siège (19) à clapet à moins qu'une pression soit exercée sur le collet à l'encontre des moyens (41) à ressort, et

au moins un arrêt (49) prévu sur la surface externe du collet (45) pour être mis en butée, de façon positive, contre le bord d'un col de remplissage de l'autre contenant (5) à être rempli, ledit arrêt (49) forçant le collet à se déplacer à l'encontre des moyens (41) à ressort pour ainsi ouvrir les moyens (17) à clapet lorsque l'extrémité de sortie du tube (9) est insérée et poussée à l'intérieur du col de remplissage dudit autre contenant (5) à être rempli; ledit bec (1) étant caractérisé en ce que:

e) le tube (9) comprend une longue partie (11) d'arrivée et une courte partie (13) de sortie formant angle avec la longue partie (11) d'arrivée, cet angle étant inférieur à 90°;

f) les moyens (17) à clapet sont de courte taille et sont montés dans le tube (9) adjacent à son extrémité de sortie; et

g) des moyens (67) d'arrêt sont montés extérieurement sur le tube (9) au-dessus de la position normale de repos du collet (49) afin de limiter le mouvement dudit collet vers le haut lorsque le bec est utilisé, ces moyens (67) d'arrêt étant ajustables entre une position limite où ils bloquent complètement le collet (45) et ferment ainsi le tube (9), et une autre position limite où ils permettent que les moyens à clapet soient complètement ouverts.

2. Un bec verseur tel que revendiqué dans la revendication 1, caractérisé en ce que:

la surface externe du collet (45) a au moins deux arrêts (49);

ces arrêts (49) sont de grandeurs décroissantes pour permettre au bec d'être utilisé sur des ouvertures de remplissage de différentes grandeurs, et

chaque arrêt consiste en une butée s'étendant vers l'intérieur dans la surface externe du collet (45).

3. Un bec verseur tel que revendiqué dans les revendications 1 ou 2, caractérisé en ce qu'il comporte en outre:

une tige conductrice de lumière montée sur le tube (9) et en dépassant la partie (13) de sortie.

4. Un bec verseur tel que revendiqué dans les revendications 1, 2 ou 3, caractérisé en ce que:

le siège (19) de clapet a une surface (21) en cône tronqué.

*Fig. 1*

*Fig. 2*

*Fig. 3*